# EUROPEAN PATENT APPLICATION

(11) **EP 1 648 154 A2**
(43) Date of publication of application: **19.04.2006**
(21) Application number: 05022242.1
(22) Date of filing: 12.10.2005
(51) Int. Cl.: H04N 1/405, H04N 1/40

(54) **Halftone processing apparatus and method, printing apparatus**

(30) Priority: 18.10.2004 JP 2004303599
(71) Applicant: SONY CORPORATION, Tokyo 141-0001 (JP)
(72) Inventor: Takakura, Masayuki, Shinagawa-ku, Tokyo, 141-0001 (JP); Kuwahara, Soichi, Shinagawa-ku, Tokyo, 141-0001 (JP); Ishihara, Mitsugu, Machida-shi, Tokyo (JP)
(74) Representative: Müller - Hoffmann & Partner

(57) **Abstract**

A halftone processing apparatus that is incorporated in a printing apparatus capable of representing the gradation of one pixel by using a plurality of dots or that is incorporated in an information processing apparatus for generating print data to be supplied to the printing apparatus is provided. The halftoning processing apparatus includes a defect position storage section storing position information for specifying an area in which a print defect is confirmed; an error diffusion processing section quantizing an input density signal of multi-valued gradation corresponding to each pixel by using a threshold value and adding the resultant quantization error to front pixels in a diffused manner; and a quantization input switching section controlling a quantization input of an input density signal of a pixel corresponding to position information to zero when the input density signal is quantized by the error diffusion processing section.

## Description

### CROSS REFERENCES TO RELATED APPLICATIONS

The present invention contains subject matter related to Japanese Patent Application JP 2004-303599 filed in the Japanese Patent Office on October 18, 2004, the entire contents of which are incorporated herein by reference.

### BACKGROUND OF THE INVENTION

### 1. Field of the Invention

The present invention relates to a halftone processing apparatus incorporated in a printing apparatus capable of representing the gradation of one pixel by using a plurality of dots and incorporated in an information processing apparatus for generating print data for the printing apparatus. The present invention relates to a printing apparatus in which a halftone processing apparatus is incorporated. The present invention relates to an information processing apparatus in which a halftone processing apparatus is incorporated. The present invention relates to a halftone processing method performed inside or outside a printing apparatus for the purpose of an output by the printing apparatus. The present invention relates to a program for implementing a halftoning process through signal processing by a computer.

### 2. Description of the Related Art

At present, there has been a demand for a printing apparatus of an ink-jet method to have a high image quality and a high printing speed. In response to this demand, finer structure and high-density mounting of nozzles mounted in a print head have been in progress. In particular, recently, for the purpose of shortening further the print time, a product in which a line head is incorporated has appeared. The term "line head" refers to a fixed-type print head in which nozzles are arranged over the print width (hereinafter, also referred to as a "fixed head").

If this print head is used, the reciprocation driving of the head block by a carriage is eliminated, and one line of a print image can be recorded in one operation literally. That is, the printing process of the entire image can be completed by one scan operation.

### SUMMARY OF THE INVENTION

The number of nozzles per line, which is mounted in the line head, reaches as much as several thousand. For example, in the case of a thermal ink-jet method, in individual nozzles, one or more heaters for causing air bubbles to be generated in ink are arranged. This heater is formed on a semiconductor chip.

However, in the manufacture of semiconductors, it is not practical to form heaters for nozzles, the number of which reaches several thousand, on one chip. Accordingly, in existing products, a print head is formed by arranging semiconductor chips of a size that can be manufactured by the number of them that cover the entire area of the print width. In a line head for a color print, the total number of nozzles reaches tens of thousands. For this reason, it is not easy to maintain a state in which all nozzles are formed without variations and operate stably during a printing. In most cases, various factors, such as the dimensional tolerance of parts, assembly accuracy, mixing in of dust, generation of air bubbles in the ink flow path, adhesion of ink around nozzles, and changes over time, affect the discharge mechanism of ink droplets. Furthermore, those cause defect conditions, such as a discharge curve of ink, non-discharge, and variations in the amount of liquid, to easily occur. As a result, in the line head, which is a fixed head, line-shaped density variations and white stripes easily appear in the direction of printing.

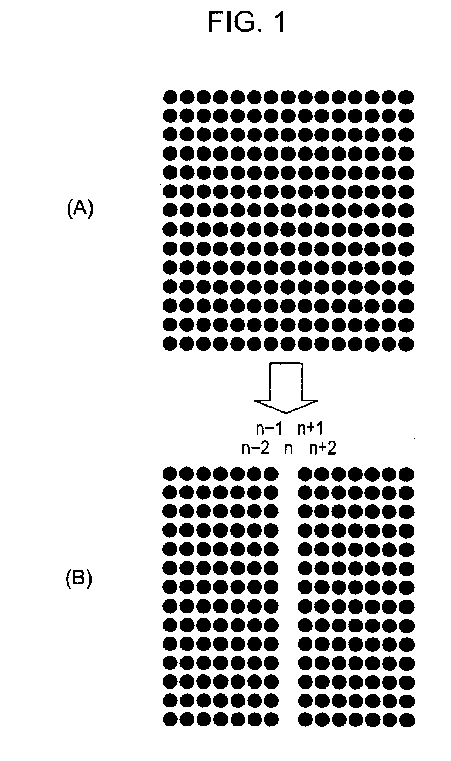

Fig. 1 shows an example of occurrence of white stripes in the line head, in which each pixel is formed on a recording medium by using ● (black circle). Part (A) of Fig. 1 shows an example of a normal print. Part (b) of Fig. 1 shows an example of a print in which a nondischarge occurs in the n-th nozzle. In Fig. 1, each pixel is represented by the presence or absence of a dot.

Though the generation probability is lower than that in a line head, in the case of a serial head, there is also the problem of a print defect by a defective nozzle. Furthermore, in the case of a laser printing method, also stripes due to scratches and adhesion of dust may occur.

The inventors of the present invention have proposed the following technological techniques on the basis of the above recognition.

### (A) Technological technique 1

As a signal processing technology for implementing a halftoning process used in a printing apparatus capable of representing the gradation of one pixel by using a plurality of dots or used to generate print data to be supplied to the printing apparatus, a technological technique for performing the following is proposed:
(a) an error diffusion process for quantizing an input density signal of multi-valued gradation corresponding to each pixel by using a threshold value and for adding the resultant quantization error to front pixels in a diffused manner, and
(b) a quantization input switching process for controlling a quantization input of an input density signal of a pixel corresponding to position information to zero when the input density signal is quantized by the error diffusion processing section.

In this case, the quantization value diffused to the defect area is switched and controlled to zero. The quantization error diffused to the front pixels is given by the density signal after density correction - the quantization value (zero). That is, the density signal after the density correction directly becomes a quantization error with respect to the front pixels.

### (B) Technological technique 2

As a signal processing technology for realizing a halftoning process that is used in a printing apparatus capable of representing the gradation of one pixel by using a plurality of dots or that is used to generate print data to be supplied to a printing apparatus, a signal processing technology for performing the following is proposed:
(a) an error diffusion process for quantizing an input density signal of multi-valued gradation corresponding to each pixel by using a threshold value and for adding the resultant quantization error to the front pixels in a diffused manner, and
(b) an error switching process for using, for an error to be diffused to front pixels, a quantization input of an input density signal of a pixel corresponding to position information for specifying the area in which a print defect is confirmed when the input density signal is quantized, for an error to be diffused to front pixels,.

In this case, for the quantization input corresponding to the defect area, the density signal after the density is corrected is directly supplied. Therefore, the quantization error to be diffused to the front pixels is given by the density signal after the density is corrected - the quantization value (actual data). However, with respect to the defect area, the density signal after the density is corrected is used as a quantization error.

If the signal processing technology according to the embodiment of the present invention is adopted, the quantization input corresponding to the defect area is used directly as a quantization error for the front pixels.

In consequence, the gradation densities of the pixels in the vicinity of or adjacent to the defect area can be made higher than that in the processing of the related art. Consequently, in the defect area due to white stripes and an insufficient density, the print defect becomes not conspicuous owing to a mask effect from the viewpoint of vision.

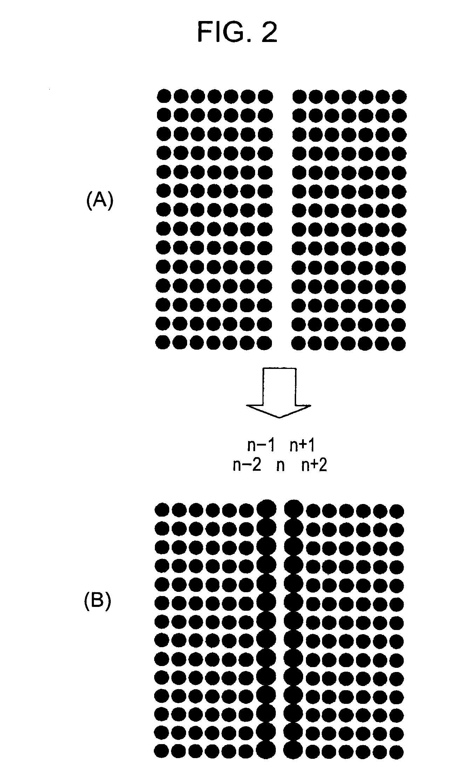

Fig. 2 an example of a print by a printing apparatus, in which a line head of an ink-jet method is incorporated. At any rate, the basic principles apply the same to a printing apparatus of a laser printing method, which is capable of representing the gradation of one pixel by using a plurality of dots.

Part (A) of Fig. 2 shows an example of a print when there is a nondischarge nozzle, in which the n-th ● (black circle) to be formed on a recording medium is not printed and is formed as white stripes. Part (B) of Fig. 2 shows an example of a print when the n-th nozzle is registered as an area in which a print defect is confirmed, and also shows a state in which the n-th quantization input value is diffused to the density signals corresponding to the (n-1)th and (n+1)th nozzles. In this example, a state in which the density gradation value is corrected so as to be high is shown by a large dot diameter. The dot diameter is preferably seen large physically, but it is only necessary that the density is seen dark. In any case, as a result of the densities of the pixels around the defect area are printed dark, a white hollow and density variations are confirmed visually, and the print quality is improved.

### BRIEF DESCRIPTION OF THE DRAWINGS

Fig. 1 shows an example of a print when a nondischarge position is contained;
Fig. 2 shows an example of a print when a halftoning process according to an embodiment of the present invention is performed at the nondischarge position;
Fig. 3 shows an example of the configuration of a line head;
Figs. 4A, 4B, 4C, 4D, and 4E show examples of a pattern in which pixels are formed by overprinting of ink droplets;
Fig. 5 shows an example of the internal configuration of a printing apparatus;
Fig. 6 shows an example of the configuration of a halftone processing section (error diffusion section);
Figs. 7A and 7B show an example of a coefficient matrix used at a normal nozzle position and an example of a coefficient matrix used at a defective nozzle position, respectively;
Fig. 8 shows the relationship between threshold values and PNM values used in a halftoning process according to an embodiment of the present invention;
Fig. 9 shows an example of a print when a halftoning process of the related art is applied when a nondischarge nozzle is included;
Fig. 10 shows an example of a print when a halftoning process according to an embodiment of the present invention is applied when a nondischarge nozzle is included;
Fig. 11 shows some of enlarged print results according to a technique of the related art and according to an embodiment of the present invention;
Fig. 12 shows another example of the configuration of the halftone processing section (error diffusion section);
Fig. 13 shows the relationship between threshold values and PNM values used in a halftoning process according to an embodiment of the present invention;
Figs. 14A, 14B, 14C, and 14D show examples of a pattern, in which pixels are formed, which is suitable for use when the pixel gradation is reproduced using a plurality of ink droplets having different densities;
Figs. 15A, 15B, 15C, and 15D show examples of a pattern, in which pixels are formed, which is used when the pixel gradation is reproduced by an area filling-up rate; and
Fig. 16 shows an example of a print system in which an information processing apparatus is connected to a printing apparatus.

### DESCRIPTION OF THE PREFERRED EMBODIMENTS

An embodiment of a signal processing technology according to the present invention will be described below. A well-known or publicly known technology of the target technological field is applied to portions that are not particularly shown in the figures or described in this specification. An embodiment to be described below is one embodiment of the present invention and should not be limited to this embodiment.

### (A) Example of application to ink-jet printer

### (A-1) Overall configuration

An example of an application to an ink-jet printer is described. It is assumed here that a line head is incorporated in a print head. The print head is assumed to handle a color print. In this example, a description is given by assuming that the print head can handle four colors of Y (yellow), M (magenta), C (cyan), and K (black).

### (a) Configuration of line head

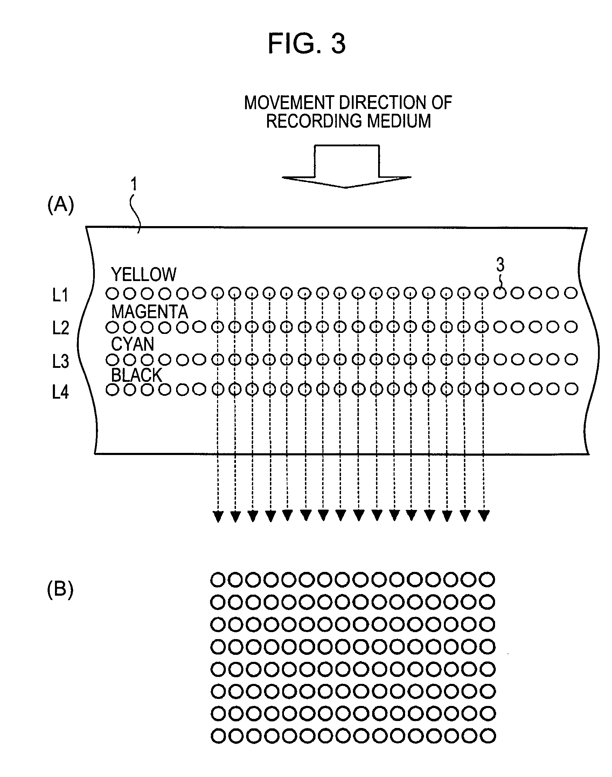

Part (A) of Fig. 3 shows the nozzle plane of a print head 1. In this print head 1, line heads L1, L2, L3, and L4 corresponding to each color are arranged in the direction of the movement of a recording medium. In the case of this example, they are arranged in the order of Y (yellow), M (magenta), C (cyan), and K (black).

In individual line heads, nozzles 3, which are discharge outlets of ink, are arranged at specified pitches. The nozzles 3 are arranged over the same length as the print width.

Part (B) of Fig. 3 shows a landing pattern of ink droplets by the individual line heads. Individual ○ (white circle) shown in part (B) of Fig. 3 correspond to one pixel. The ink droplet of each color corresponding to the same pixel is discharged at the same pixel position. That is, the ink droplets of the four colors corresponding to the same pixel are overprinted at the same location.

For discharging ink droplets, a heater underneath the nozzle is used. A thermal ink-jet method is adopted in which ink in the liquid chamber is caused to generate air bubbles by the heater and ink droplets are discharged by the expansion power thereof. Alternatively, a piezoelectric method and other methods can be applied as the ink droplet discharge method.

In the case of this embodiment, it is assumed that a maximum of p shots (p is a natural number) of ink droplets corresponding to each color can be discharged to one pixel. The gradation expression power of each pixel can be increased in proportion to the natural number p. It is assumed that, for example, a maximum of 7 shots can be discharged to one pixel. This driving method is called a "PNM (pulse numbering modulation) driving method".

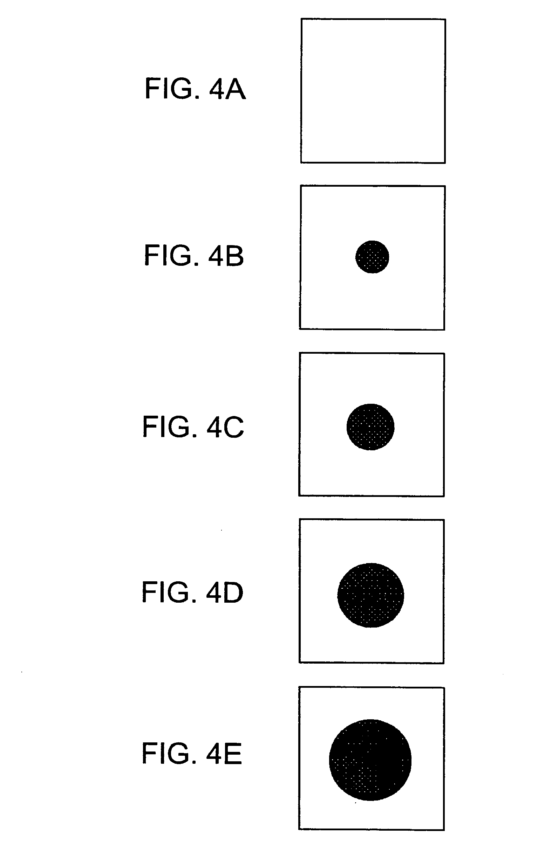

Figs. 4A, 4B, 4C, 4D, and 4E show examples of forming one pixel by a maximum of 4 shots of ink droplets. Fig. 4A shows a case in which ink droplets are not discharged. Fig. 4B shows a case in which 1 shot is discharged. Fig. 4C shows a case in which 2 shots are discharged. Fig. 4D shows a case in which 3 shots are discharged. Fig. 4E shows a case in which 4 shots are discharged. That is, a case in which one pixel can be represented with five gradations is shown.

In the case of this example, the dot diameter forming the pixel becomes larger in proportion to the number of ink droplets, and the density that is perceived increases in proportion to this increase.

### (b) Internal configuration of printer main unit

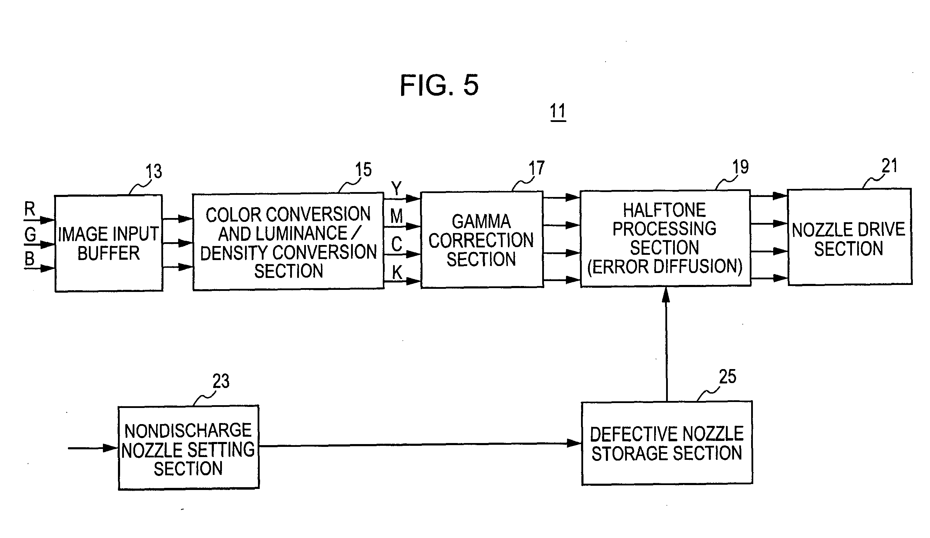

Fig. 5 shows an example of the configuration of an ink-jet printer main unit 11. The ink-jet printer main unit 11 includes, as main components, an image input buffer 13, a color conversion and luminance/density conversion section 15, a gamma correction section 17, a halftone processing section (error diffusion section) 19, a nozzle drive section 21, a defective nozzle setting section 23, and a defective nozzle storage section 25. The image input buffer 13 is a storage device for temporarily storing characters, images, and other print data. For example, a semiconductor memory or a hard disk is used therefor.

Fig. 5 shows a case in which primary-color data (RGB data) is input as the print data of a color image. In the case of a monochrome print (including a grayscale image), luminance data is input as print data.

The color conversion and luminance/density conversion section 15 is a processing device for converting print data into density data. When the print data is of a color image, the color conversion and luminance/density conversion section 15 converts primary-color data (RGB 24 bits) into color data (YMCK 32 bits). For this conversion process, a known technology is used. That is, a LOG conversion, a masking process, and a UCR/BG process are applied. In general, a three-dimensional look-up table is used.

When the print data is a monochrome image, the color conversion and luminance/density conversion section 15 converts the data into density data by inverting luminance data.

The gamma correction section 17 is a signal processing section for correcting density data so that the reproduction characteristics of the density on the recording medium become a straight line. A curve used to correct density data is called a "gamma curve". The gamma curve is given as reverse characteristics with respect to the reproduction characteristics of ink corresponding to each color. The reproduction characteristics of ink depends on the type of the recording medium, the permeability of ink with respect to the recording medium, and the density of ink.

The halftone processing section (error diffusion section) 19 is a processing device for decreasing the number of gradations of the density data of multi-valued gradation in order to convert it into a data format suitable for a PNM driving method. Here, n-valued data after the conversion is called "nozzle driving data". n corresponds to the number of gradations that can be represented. Therefore, the maximum number of ink droplets for forming one pixel is given by n - 1. In the case of this embodiment, the maximum value of n is 9.

When converting into nozzle driving data, the halftone processing section (error diffusion section) 19 performs an error diffusion process.

In the error diffusion process, as a result of diffusing, to the front pixels, a quantization error that occurs when the density data of continuous gradation is converted into a limited gradation value, the densities possessed by the original image are reproduced up to details without discarding details. Here, the term "front pixels" refer to succeeding pixels in the time-series.

The technique proposed by the inventors of the present invention is applied to this error diffusion process. That is, a technique in which the insufficient density caused by a printing by a defective nozzle is handled as a quantization error in the error diffusion process and the vision characteristics are corrected by surrounding pixels is applied. Specific processing will be described later.

The nozzle drive section 21 is a processing device for controlling the discharge operation of ink droplets. The nozzle drive section 21 controls the discharge operation of ink droplets by line heads L1 to L4 on the basis of nozzle driving data given for each color.

The defective nozzle setting section 23 is an interface used for setting and inputting a defective nozzle position. For example, a switch and a GUI (graphical user interface) are used. The setting person registers the position of the defective nozzle in the defective nozzle storage section 25 via this defective nozzle setting section 23. For example, the nozzle number of the defective nozzle is registered.

The position of the defective nozzle is confirmed through an inspection before shipment and a test print during operation. For detecting the defective nozzle position, there are various test patterns. For example, the applicant of the present invention has proposed Japanese Patent Application Nos. 2004-056871 and 2004-056872.

The defective nozzle storage section 25 is a storage device for storing and holding the defective nozzle position that is set and input. For example, a non-volatile semiconductor memory, a hard disk, and other non-volatile memories are used. The defective nozzle position stored in the defective nozzle storage section 25 is supplied to the halftone processing section (error diffusion section) 19.

### (A-2) Configuration of halftone processing section (error diffusion section)

### (a) Example of configuration 1

Here, a description is given of a case in which a technique for controlling a quantization input to zero is adopted.

### (1) Function block configuration

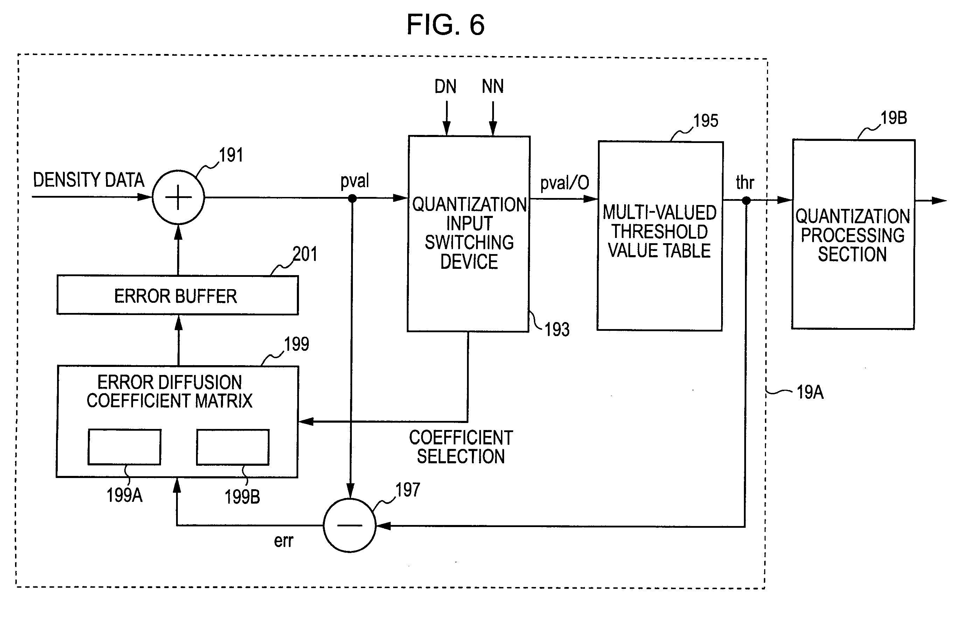

Fig. 6 shows an example of the configuration of the halftone processing section (error diffusion section) 19. The halftone processing section 19 includes an error diffusion processing section 19A and a quantization processing section 19B. The error diffusion processing section 19A includes an adder 191, a quantization input switching device 193, a multi-valued threshold value table 195, a subtractor 197, an error diffusion coefficient matrix 199, and an error buffer 201.

The adder 191 is a computation unit for adding a correction value supplied from the error buffer 201 to density data (input value of multi-valued gradation). This addition process corresponds to a process for correcting the errors such that the quantization errors that occurred previously are diffused to surrounding pixels and are accumulated.

The quantization input switching device 193 is a processing device for switching a quantization input "thrin" to be supplied to the multi-valued threshold value table 195 according to whether or not the density data "pval" to be processed matches the defective nozzle number.

In the case of this embodiment, the processing position NN of the density data is supplied externally. The defective nozzle position DN is supplied from the defective nozzle storage section 25.

The quantization input switching device 193 outputs zero when the processing position NN of the density data matches the defective nozzle position and directly outputs the input density data "pval" when they do not match each other. The quantization input switching device 193 also performs the switching of the coefficient matrix used in the error diffusion coefficient matrix 199.

The multi-valued threshold value table 195 is a processing device for rounding the density data supplied as continuous gradation to representative values. In the case of this embodiment, the representative values are five values of "0", "63", "127", "191", and "255". The multi-valued threshold value table 195 converts the density data input via the quantization input switching device 193 into one of the five values.

The subtractor 197 is a computation unit for determining a quantization error "err" generated in the process for rounding into a representative value "thr". The subtractor 197 determines the quantization error "err" by subtracting the conversion output "thr" from the density data "pval" after density correction.

The error diffusion coefficient matrix 199 is a processing device for multiplying the quantization error "err" by the error diffusion coefficient so as to make it to be a correction value to be added to the front pixels. For the error diffusion coefficient matrix 199, two types of coefficient matrixes 199A and 199B are provided for a normal nozzle and a defective nozzle.

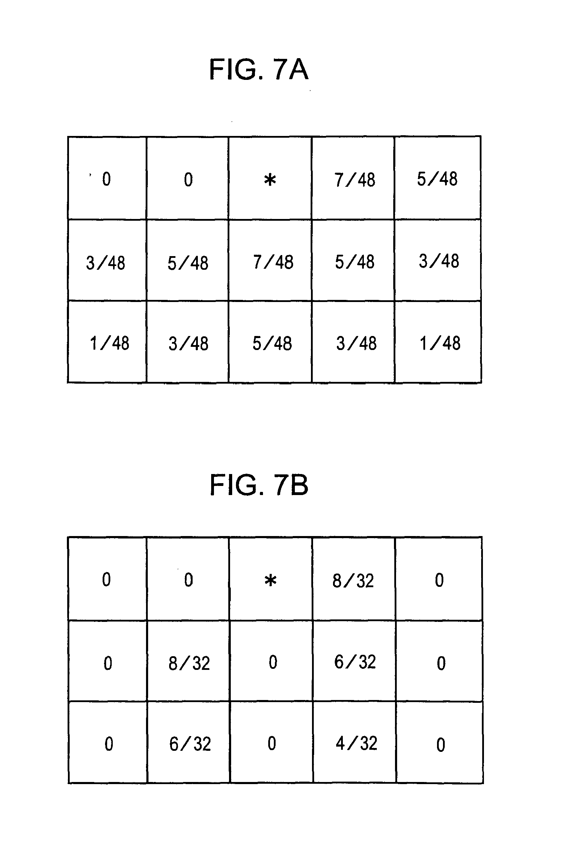

Figs. 7A and 7B show examples of coefficient matrixes. Fig. 7A shows an example of a coefficient matrix for a normal nozzle, in which the pixel of interest to be processed, is indicated by the * mark. In the case of this coefficient matrix, the quantization error generated with respect to the pixel of interest is diffused up to two rows ahead in the range of two pixels on the right and left with respect to the pixel of interest. That is, the quantization error is diffused to 12 pixels. The diffusion coefficient is given in such a manner that the far from the pixel of interest at the center, the smaller it becomes.

Fig. 7B shows an example of a coefficient matrix for a defective nozzle, in which the pixel of interest to be processed is similarly indicated by the * mark. In the case of this coefficient matrix, the quantization error generated with respect to the pixel of interest is diffused up to two rows ahead on both the right and left sides of the column of the pixel of interest. That is, the quantization error is diffused to 5 pixels. The amount of error allocated to the both the right and left sides of the column of the pixel of interest becomes greater than that for the normal nozzle in such a manner as to correspond to the lesser number of diffusion targets.

There is no diffusion of the amount of error with respect to the front pixels at the same column as the column of the pixel of interest. The reason for this is that these pixels are pixels that are printed using the same defective nozzle and even if the amount of error is allocated, this is not reflected in the print result.

The error buffer 201 is a storage device in which a correction value computed as a multiplication result of the quantization error and the coefficient matrix is stored.

The quantization processing section 19B is a processing device for converting the representative value "thr" supplied from the error diffusion processing section 19A into nozzle driving data corresponding to the number of ink droplets. More specifically, the quantization processing section 19B is formed of a quantization device having four threshold values.

Therefore, in the case of this embodiment, the representative value "thr" provided by five values of "0", "63", "127", "191", and "255" is converted to one of "0" "1", "2", "3", and "4".

### (2) Operation when a printing is performed

Next, a description is given of the printing operation of an ink-jet printer in which the halftone processing section (error diffusion section) 19 having the configuration shown in Fig. 6 is incorporated.

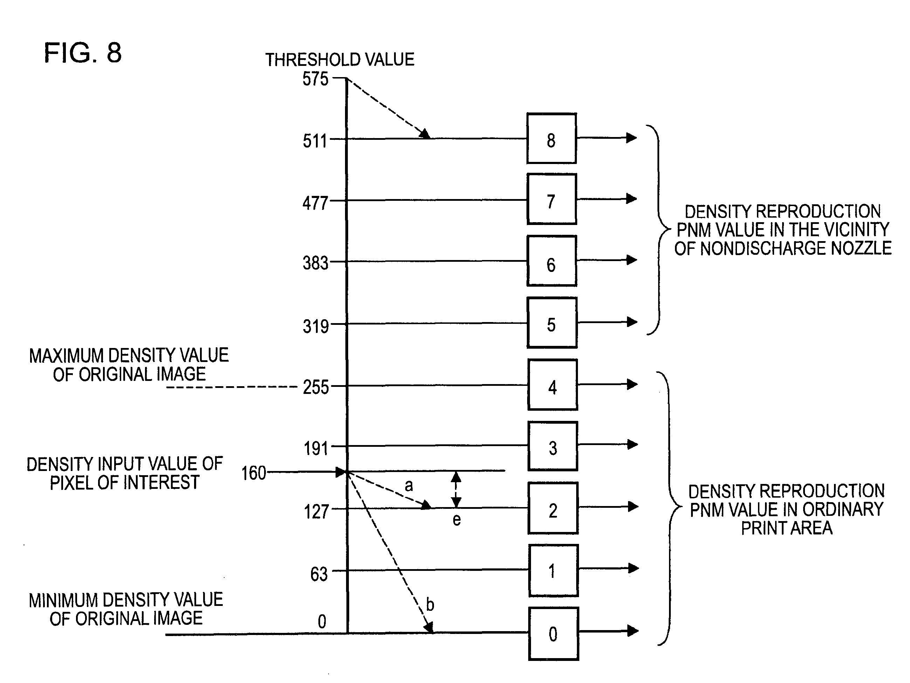

Fig. 8 shows the corresponding relationship between each threshold value used in the multi-valued threshold value table 195; and each representative value and quantization outputs. As shown in Fig. 8, in this ink-jet printer, density data of 255 values is converted into nozzle driving data of 5 values. That is, in the normal printing operation by a normal nozzle, one pixel is reproduced by a maximum of four shots of ink droplets per color.

During the normal operation, the maximum value of error is "63". Therefore, even when the density data is "255", the density data "pval" after the error is corrected does not become the next threshold value "319" or more. That is, the maximum number of discharges for one pixel per color during the normal operation is 4.

On the other hand, as shown in Fig. 8, for the line head 1, nozzles having the capability of discharging a maximum of 8 shots for one pixel per color are used. This extra discharge performance improves the effects of the correction function proposed by the inventors of the present invention even further.

A description is given by using a specific example. Here, a case in which the density data is "160" is considered. When this density data corresponds to the normal nozzle, the density data "160" is provided to the multi-valued threshold value table 195. This value is greater than the threshold value "127" and smaller than the threshold value "191". Therefore, the multi-valued threshold value table 195 outputs "127" as a conversion output "thr" corresponding to the density data "160".

This conversion output "thr" of "127" is quantized and is converted into nozzle driving data "2" in the quantization processing section 19B.

At this time, the quantization error "err" is given by "33 (= 160 - 127)" and is distributed as a correction value for surrounding pixels in the diffusion coefficient matrix 199. At this time, for the coefficient matrix, that of Fig. 7A is used. In Fig. 8, the coefficient matrix is indicated by the arrow "a".

In contrast, when the density data corresponds to a nondischarge nozzle, density data "0" is provided to the multi-valued threshold value table 195. In Fig. 8, the density data is indicated by the arrow "b".

In the related art, similarly to the case of the normal nozzle, the density data is converted into the nozzle driving data "2". However, this is the same as the fact that, in the nondischarge nozzle, it is density data "0" in that it is difficult to discharge ink droplets.

Accordingly, in the halftone processing section (error diffusion section) 19, density data (i.e., quantization input) provided to the multi-valued threshold value table 195 is actively switched to "0". As a result, "160" is generated as a quantization error "err" in the subtractor 197.

Then, similarly to the typical error diffusion process, this quantization error "160" is feed-forwarded to the front pixels. At this time, for the coefficient matrix, that of Fig. 7B is used.

The maximum value of the typical quantization error "err" is "63". Therefore, the maximum value of the quantization error generated at the defective nozzle position is "318".

Then, this quantization error, together with another correction error, is added to the density data of the front pixels. In consequence, the maximum value of the density data value that can be input to the multi-valued threshold value table 195 at positions on both sides of the defective nozzle position is "574 (= 256 + 318)".

For this reason, in the multi-valued threshold value table 195 shown in Fig. 8, as the maximum value of the threshold value, a value up to "575" is provided.

Therefore, even when the density data on both sides of the pixel corresponding to the defective nozzle is "255", the number of dots corresponding to the density greater than or equal to that value can be generated as nozzle driving data.

In general, if too many ink droplets are discharged to one pixel, blurring of ink occurs on the recording medium, and this is undesirable.

However, in this embodiment, the blurring of ink is actively generated by planting liquid droplets whose number exceeds a normal limit to adjacent pixels surrounding the nondischarge pixel in particularly a high-density portion. As a result, effects of narrowing the spacing of stripes and dots generated by a nondischarge and of making them to be less conspicuous are realized.

### (3) Advantages of the embodiment

As described above, as a result of controlling the density data (quantization input) to the multi-valued threshold value table 195 to zero at the position of the defective nozzle (including not only a nondischarge, but also an insufficient amount of discharge), all the corrected density data can be used for the quantization error "err".

That is, the density of the adjacent pixels surrounding the nondischarge pixel can be accentuated dark higher than the original density. In consequence, as shown in part (B) of Fig. 2, the densities on both sides of the nondischarge pixel are accentuated, and the masking effect thereof allows stripes to be difficult to see.

When the density of the defective nozzle part corresponds to a typical highest density, blurring and an increase in the dot diameter, resulting from further making the number of ink droplets exceeding the limit density, allow stripes to be difficult to be conspicuous. That is, the image quality can be improved.

In this correction technology, the amount of correction does not become a fixed value due to the mechanism for diffusing the actual image data to be reproduced in the defective nozzle section, and accentuation with a correlation with adjacent pixels in the surrounding is made possible by the amount of correction corresponding to the density possessed by the pixel corresponding to the defective nozzle position. That is, the densities on both sides neither increases extremely in the picture portion of a low density, nor only the correction result become extremely conspicuous. Furthermore, a situation can be effectively avoided in which an increase in the density on both sides becomes small due to the insufficiency of the number of ink droplets in the picture portion of a high density and it is difficult to obtain a sufficient masking effect.

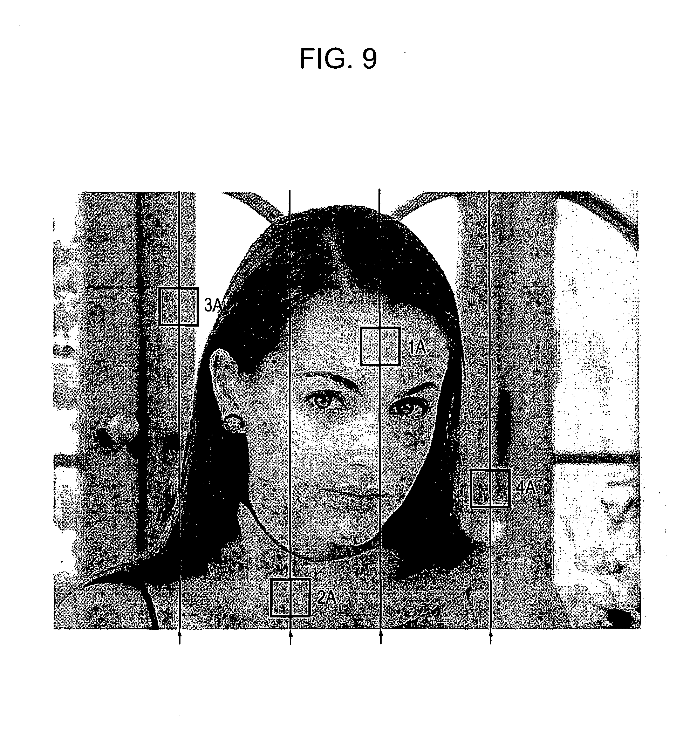

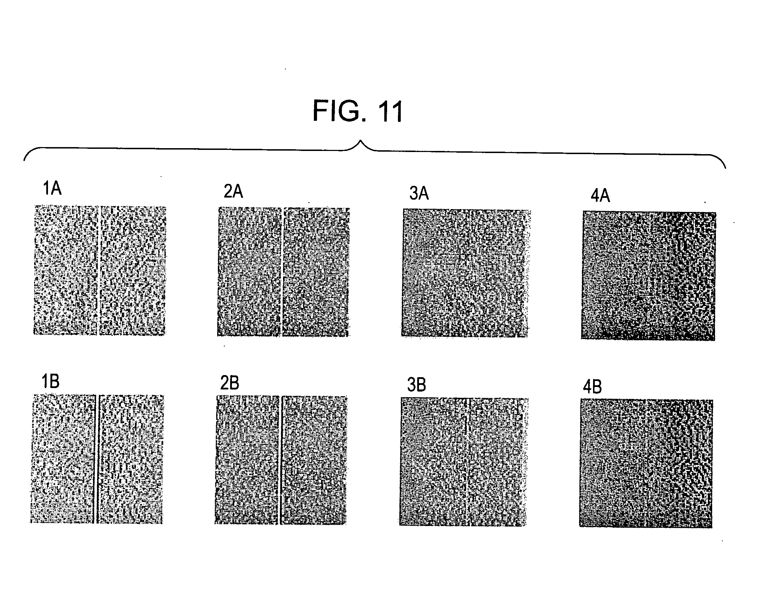

Figs. 9 to 11 show examples of prints. Fig. 9 shows an example of a print when a nondischarge nozzle is included in the print head 1. On the image plane of this print, four stripes are recognized. Two of them are comparatively conspicuous and exist in nearly the central area of the print image plane. An enlarged view of part areas 1A to 4A of each stripe is shown in Fig. 11.

The stripe portion of the area 1A corresponds to a case in which all the nozzles of C, M, and Y are nondischarges. The stripe portion of the area 2A corresponds to a case in which the M nozzle is a nondischarge. The stripe portion of the area 3A corresponds to a case in which the C nozzle is a nondischarge. The stripe portion of the area 4A corresponds to a case in which the Y nozzle is a nondischarge.

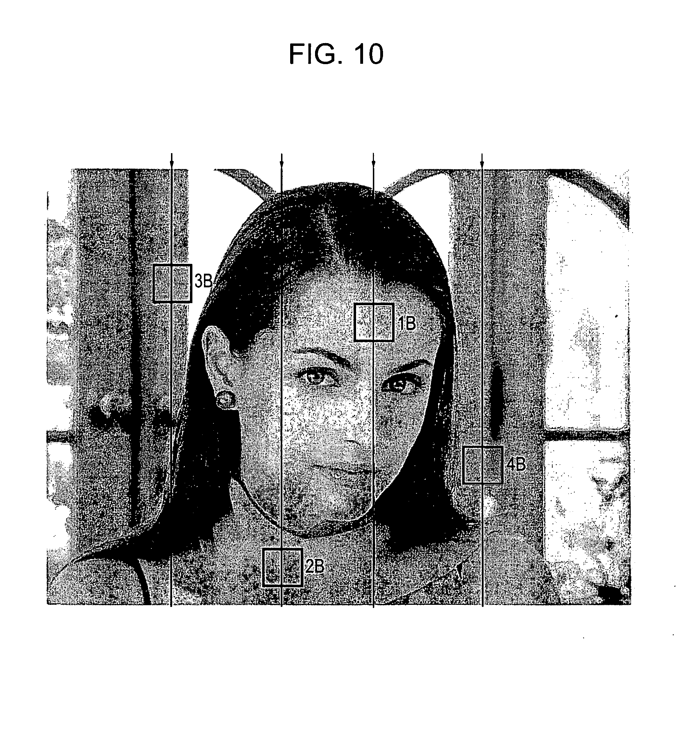

Fig. 10 shows an example of a print, in which the technique of the embodiment is applied and portions corresponding to the stripes of Fig. 9 are shown by attaching arrows. The portions where two conspicuous stripes are recognized also in Fig. 9 are shown as white hollows, and the stripes disappear.

At any rate, in the portion where all the color nozzles of four colors are nondischarges, blurring is conspicuous. However, the probability at which nozzles at the same position become nondischarges at all the colors is very small. Therefore, as can be seen from the comparison between Fig. 9 and Fig. 10, a significant improvement in the image quality is recognized in all the part areas. Also, in Fig. 10, enlarged views of the part areas 1B to 4B are shown in Fig. 11.

As shown in Fig. 11, when a comparison is made between the enlarged views, it can be confirmed that, in the print images 1B to 4B according to the embodiment, the density on both sides of the stripes is printed as a dark line.

### (b) Example of configuration 2

Next, a description is given of a case in which a technique for controlling a quantization input directly as a quantization error is adopted.

### (1) Function block configuration

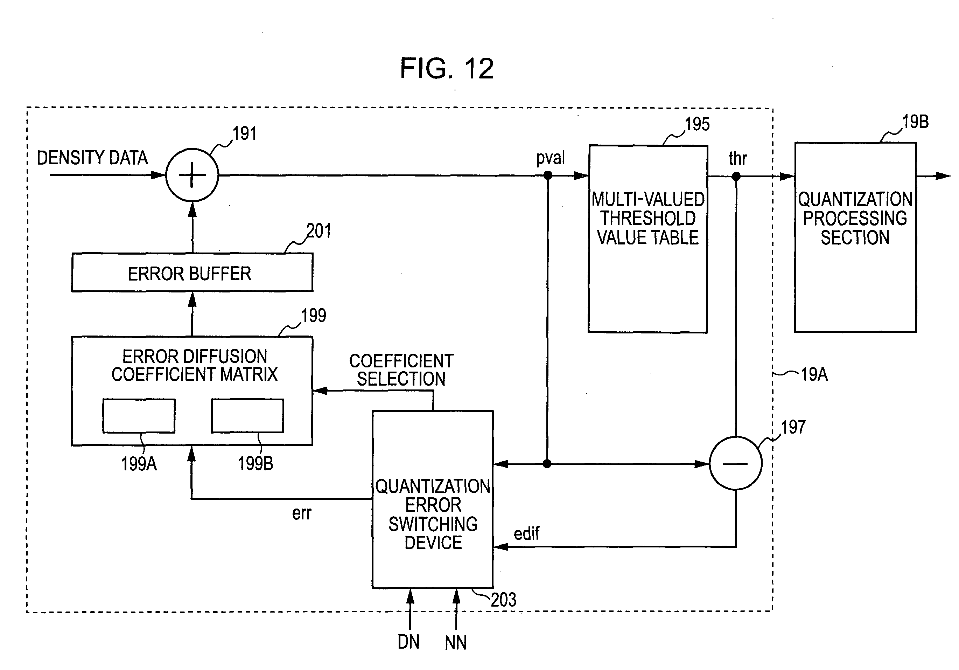

Fig. 12 shows an example of the configuration of the halftone processing section (error diffusion section) 19. Components in Fig. 12 corresponding to those in Fig. 6 are designated with the same reference numerals. The basic configuration is the same as the configuration example 1. That is, the halftone processing section (error diffusion section) 19 according to the configuration example 2 also includes an error diffusion processing section 19A and a quantization processing section 19B.

The error diffusion processing section 19A includes an adder 191, a multi-valued threshold value table 195, a subtractor 197, an error diffusion coefficient matrix 199, an error buffer 201, and a quantization error switching device 203.

The difference from the configuration example 1 is that, in place of the quantization input switching device 193, the quantization error switching device 203 is incorporated. That is, the difference is that, instead of switching and controlling the density data to be input to the multi-valued threshold value table 195, the quantization error to be supplied to the error diffusion coefficient matrix 199 is switched and controlled.

The quantization error switching device 203 performs an operation for receiving inputs of the density data "pval" provided to the multi-valued threshold value table 195 and a quantization error "edif" generated in the subtractor 197 and for selecting one of them depending on whether or not the processing position NN of the density data matches the defective nozzle position. That is, when the two positions match each other, the density data "pval" is selected as the quantization error "err". When the two positions do not match, the quantization error "edif" is selected as the quantization error "err".

Also, the quantization error switching device 203 performs the switching of the coefficient matrix used in the error diffusion coefficient matrix 199. The switching rule is the same as that of the quantization input switching device 193.

### (2) Operation when a printing is performed

A description is given below of a printing operation of an ink-jet printer in which the halftone processing section (error diffusion section) 19 of the configuration in Fig. 12 is incorporated.

Here, the operation at the position of the defective nozzle is described. In this case, a quantization input to the multi-valued threshold value table 195 is identical to that of the normal nozzle. That is, the density data "pval" after the error is corrected is directly provided. This point differs from the configuration example 1 in which the quantization input is made zero.

Therefore, nozzle driving data at a value corresponding to the density data is supplied from the multi-valued threshold value table 195 to the quantization processing section 19B. For example, the nozzle driving data corresponding to the maximum density is also output to the nondischarge nozzle in a manner similar to the case of the normal nozzle.

In the subtractor 197, a quantization error ("63" at most) that occurred in the rounding process of the multi-valued threshold value table 195 is generated and is supplied to the quantization error switching device 203.

However, the density data "pval" after error correction is also input to the quantization error switching device 203, and the density data is supplied to the error diffusion coefficient matrix 199. Here, for the coefficient matrix, that in Fig. 7B is used. As a result, the number of discharges of ink droplets that are discharged from the nozzle on both sides of the nondischarge nozzle increases more than that during the normal time.

### (3) Advantages of the embodiment

As described above, even at the position of the defective nozzle (including not only a nondischarge but also an insufficient amount of discharge), the supply of the nozzle driving data to the nondischarge nozzle is continued. On the other hand, the density data "pval" after the error is corrected, rather than the net quantization error "edif" computed in the process of generating the nozzle driving data, is supplied to the front pixels.

As a result, the number of ink droplets output from the nozzles on both sides of the defective nozzle can be controlled to be exactly the same state as that of the configuration example 1.

The result is that, when the defective nozzle is a completely nondischarge nozzle, the same print results as those of the configuration example 1 can be obtained. When the defective nozzle has an insufficient amount of liquid, since ink droplets are landed at also a defect position, even if insufficient, it is still possible to make stripes more difficult to see.

### (B) Other embodiments

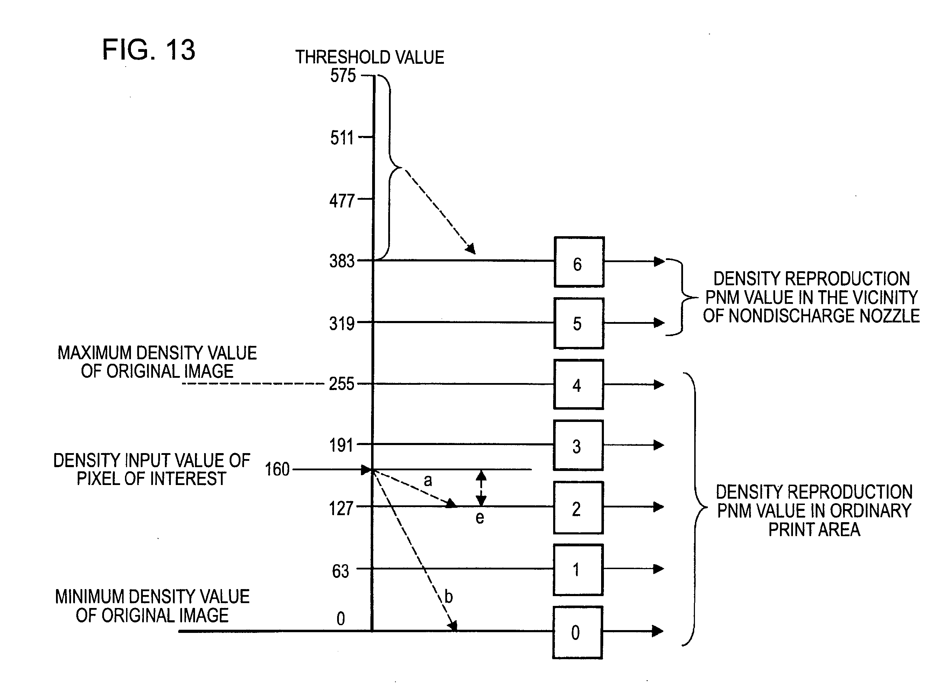

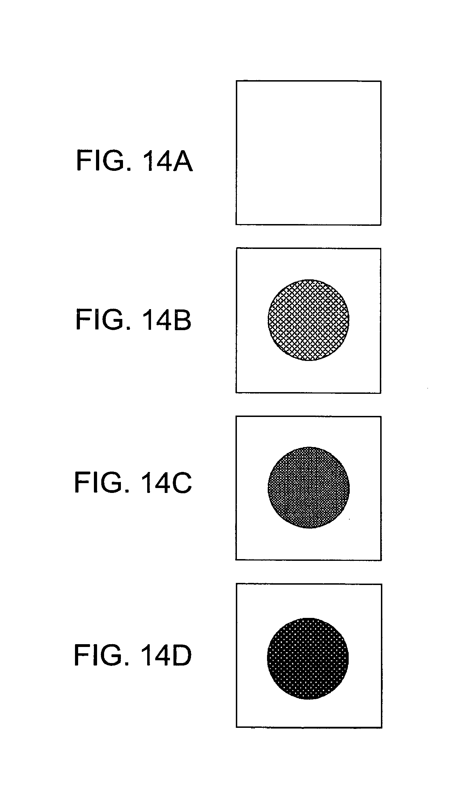

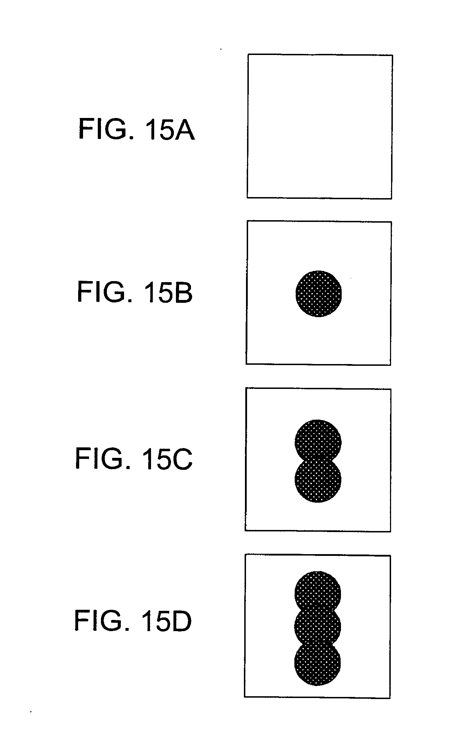

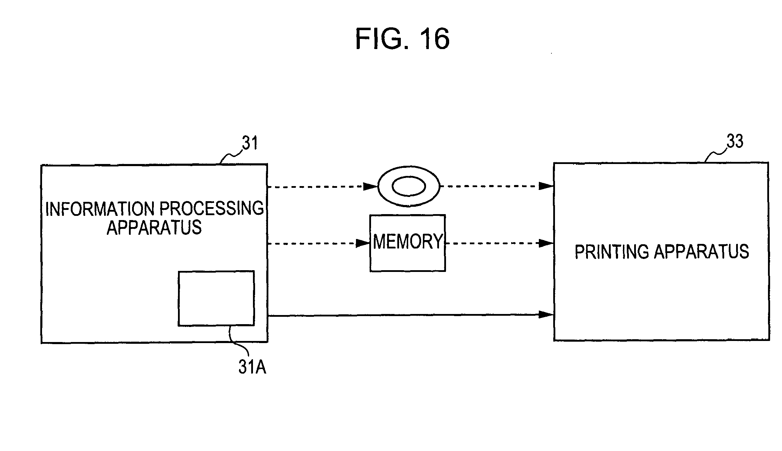

(a) In the above-described embodiment, a case is described in which a maximum of 575 threshold values of the halftone processing section (error diffusion section) 19 are provided (the highest value of the PNM value is set at "8").
   However, even when the corresponding PNM value in the halftone processing section (error diffusion section) 19 is "8" or less, advantages to some extent can be realized.
   For example, the maximum value of the PNM value can also be set to "4", which is the same as the upper-limit value for a normal print. In this case, if a defective nozzle corresponds to the discharge of the highest density of the print image, since it is difficult to discharge ink droplets higher than or equal to the upper-limit value to surrounding pixels, it is difficult to expect an appropriate correction effect. However, even in this case, in the intermediate density part in which the number of ink droplets can be increased, advantages similar to those of the above-described embodiment can be expected.
   The relationship between the threshold values and the PNM values when the corresponding PNM value in the halftone processing section (error diffusion section) 19 is set at "6" is shown Fig. 13. The maximum value of the threshold value is "477".
   In this case, also, when the defective nozzle corresponds to the discharge at the highest density of the print image, control is possible such that shots of ink droplets, which are at least up by two shots than those during the normal time, are discharged. Of course, the upper-limit value of the PNM value may be set to "8" or more.
(b) In the above-described embodiment, the switching control of the quantization input is performed at a stage prior to the multi-valued threshold value table 195. That is, the density data "pval" after the error is corrected and zero are selected.
   However, the zero control of the quantization input at the defect position may be performed at a position prior to the multi-valued threshold value table 195. Even in this manner, the same processing operation as that of the above-described embodiment can be realized. In this case, a mechanism in which a quantization error is computed by supplying an output to the quantization processing section 19B to the subtractor 197 is adopted.
(c) In the above-described embodiment, a case is described in which two types of coefficient matrixes are installed in the error diffusion coefficient matrix 199 and these are switched depending on whether the output nozzle of the pixel to be processed is a normal nozzle or a defective nozzle.
   However, the coefficient matrix can be applied even when it is of one type. Also, in this case, since the quantization error to be diffused becomes larger, the density of the surrounding pixels of the defective nozzle can be increased to more than that during the normal time. As a result, it becomes possible to make stripes resulting from a nondischarge and an insufficient amount of liquid difficult to perceive.
(d) In the above-described embodiment, a case is described in which two types of coefficient matrixes are installed in the error diffusion coefficient matrix 199 and these are switched depending on whether the output nozzle of the pixel to be processed is a normal nozzle or a defective nozzle.
   However, three or more types of coefficient matrixes may be provided. In this case, a plurality of coefficient matrixes for a defective nozzle should be installed, so that a pattern by which the print result becomes best can be selected.
(e) In the above-described embodiment, a case is described in which, in a coefficient matrix for a defective nozzle, the quantization error is diffused in a concentrated manner to one column on both sides of the defective nozzle. However, the range in which the quantization error is diffused may be expanded to two or more columns on both sides of the defective nozzle.
(f) In the above-described embodiment, because the line head is used as the print head, a defect position is specified at the nozzle position. However, when the print defect is specified as a point, a line segment, or another small area, the defect position may be specified by the pixel position. In this case, a correction process should be switched depending on the match or mismatch between the pixel position of the image to be processed and the defect position.
(g) In the above-described embodiment, the case of an ink-jet printer is described. Alternatively, the present invention can be applied to a laser printer for causing toner to adhere to a photosensitive body by using laser light and for transferring the toner onto a recording medium by heat and pressure.
(h) In the above-described embodiment, the case of an ink-jet printer in which a line head is incorporated is described. Alternatively, the present invention can be applied to a serial head type printer for printing an image through the reciprocation of the carriage.
   (i) In the above-described embodiment, ink droplets are increased or decreased on the basis of the gradation of density data. Alternatively, as shown in Figs. 14A to 14D, a printing apparatus employing a method in which a plurality of ink liquids having different densities are provided to represent the density by differently using or overprinting ink liquids on the basis of the density.
(j) In the above-described embodiment, a case is described in which ink droplets are overprinted at the same position on the basis of the gradation of the density data. Alternatively, as shown in Figs. 15A to 15D, the position at which ink droplets are landed may be shifted little by little. In this case, also, the gradation of the density can be reproduced by the change in the area filling-up rate per pixel.
(k) In the above-described embodiment, a case is described in which the halftone processing section (error diffusion section) 19 serving as a halftone processing apparatus is incorporated in the printing apparatus. Alternatively, this processing function can be implemented as a program executed in the printing apparatus.
(1) In the above-described embodiment, a case is described in which the halftone processing section (error diffusion section) 19 serving as a halftone processing apparatus is incorporated in the printing apparatus.
   Alternatively, this processing function can be incorporated in the information processing apparatus for handling a print image. Fig. 16 shows an example of a print system. This print system includes an information processing apparatus 31 and a printing apparatus 33. An image processing circuit including a halftone processing section (error diffusion section) 31A serving as a halftone processing apparatus is incorporated in the information processing apparatus 31.
   Nozzle driving data after signal processing is supplied to the printing apparatus 33 via a communication path and a recording medium (semiconductor memory, disk device, etc.).
   In the image processing apparatus 31, for example, a computer, a video camera, a digital camera, a game device, a scanner, a portable information terminal (a portable computer, a cellular phone, a portable game machine, an electronic book, etc.), a clock, an image reproduction device (e.g., an optical disc device, and a home server), a processing board, and a processing card in which the functions according to the embodiment of the present invention are incorporated, are included.
   Each image processing apparatus is configured in such a manner that the housing, the signal processing section, and the external interface are made common, and peripheral devices appropriate for a product form are combined. For example, a video camera and a digital camera include, in addition to the above-described constituents, a camera unit and a writing circuit for storing image-captured video data on a storage medium.
   Furthermore, for example, a cellular phone and another electronic device having a communication function include, in addition to the above-described constituents, a transmission and reception circuit, and an antenna.
(m) In the above-described embodiments, various modifications are possible within the spirit and scope of the present invention. Furthermore, various modifications and application examples created on the basis of the description of this specification are possible.

## Claims

1. A halftone processing apparatus that is incorporated in a printing apparatus capable of representing the gradation of one pixel by using a plurality of dots or that is incorporated in an information processing apparatus for generating print data to be supplied to the printing apparatus, the halftone processing apparatus comprising:
a defect position storage section storing position information for specifying an area in which a print defect is confirmed;
an error diffusion processing section quantizing an input density signal of multi-valued gradation corresponding to each pixel by using a threshold value and adding the resultant quantization error to front pixels in a diffused manner; and
a quantization input switching section controlling a quantization input of an input density signal of a pixel corresponding to position information to zero when the input density signal is quantized by the error diffusion processing section.

2. A halftone processing apparatus that is incorporated in a printing apparatus capable of representing the gradation of one pixel by using a plurality of dots or that is incorporated in an information processing apparatus for generating print data to be supplied to the printing apparatus, the halftone processing apparatus comprising:
a defect position storage section storing position information for specifying an area in which a print defect is confirmed;
an error diffusion processing section quantizing an input density signal of multi-valued gradation corresponding to each pixel by using a threshold value and adding the resultant quantization error to front pixels in a diffused manner; and
an error switching section using, for an error to be diffused to front pixels, a quantization input of an input density signal of a pixel corresponding to position information when the input density signal is quantized by the error diffusion processing section.

3. The halftone processing apparatus according to one of Claims 1 and 2, wherein the printing apparatus prints a line image in the print width direction in one operation without performing a scanning.

4. The halftone processing apparatus according to one of Claims 1 and 2, wherein the printing apparatus uses an ink-jet line head for an output device.

5. The halftone processing apparatus according to one of Claims 1 and 2, wherein the printing apparatus uses a laser printing method in which toner is made to adhere to a photosensitive body by using laser light and the toner is transferred to a recording medium by heat and pressure.

6. The halftone processing apparatus according to one of Claims 1 and 2, wherein the printing apparatus uses a serial head for printing a line image in the print width direction by performing a scanning.

7. The halftone processing apparatus according to one of Claims 1 and 2, wherein the error diffusion processing section has a first diffusion coefficient for a normal print area and a second diffusion coefficient for a print defect area as diffusion coefficients for diffusing the quantization error to the front pixels.

8. The halftone processing apparatus according to Claim 7, wherein the second diffusion coefficient is used to diffuse in a concentrated manner an error to pixels, which are front pixels in the vicinity of the pixel given by the position information and at which a printing can be performed normally.

9. The halftone processing apparatus according to one of Claims 1 and 2, wherein, when the printing apparatus performs a printing by an ink-jet method, the position information for specifying an area in which a print defect is confirmed is given as a nozzle number.

10. The halftone processing apparatus according to one of Claims 1 and 2, wherein, when the printing apparatus performs a printing by an ink-jet method, the position information for specifying an area in which a print defect is confirmed is given as information for specifying pixels.

11. The halftone processing apparatus according to one of Claims 1 and 2, wherein, when the printing apparatus performs a printing by a laser method, the position information for specifying an area in which a print defect is confirmed is given as information for specifying pixels.

12. A printing apparatus capable of representing the gradation of one pixel by using a plurality of dots, the printing apparatus comprising:
a defect position storage section storing position information for specifying an area in which a print defect is confirmed;
an error diffusion processing section quantizing an input density signal of multi-valued gradation corresponding to each pixel by using a threshold value and for adding the resultant quantization error to front pixels in a diffused manner; and
a quantization input switching section controlling a quantization input of an input density signal of a pixel corresponding to position information to zero when the input density signal is quantized by the error diffusion processing section.

13. A printing apparatus capable of representing the gradation of one pixel by using a plurality of dots, the printing apparatus comprising:
a defect position storage section storing position information for specifying an area in which a print defect is confirmed;
an error diffusion processing section quantizing an input density signal of multi-valued gradation corresponding to each pixel by using a threshold value and adding the resultant quantization error to front pixels in a diffused manner; and
an error switching section using, for an error to be diffused to front pixels, a quantization input of an input density signal of a pixel corresponding to position information when the input density signal is quantized by the error diffusion processing section.

14. The printing apparatus according to one of Claims 12 and 13, further comprising a setting section for registering position information for specifying an area in which a print defect is confirmed in the defect position storage section.

15. An information processing apparatus for generating print data to be supplied to a printing apparatus capable of representing the gradation of one pixel by using a plurality of dots, the information processing apparatus comprising:
a defect position storage section storing position information for specifying an area in which a print defect is confirmed;
an error diffusion processing section quantizing an input density signal of multi-valued gradation corresponding to each pixel by using a threshold value and adding the resultant quantization error to front pixels in a diffused manner; and
an error switching section using, for an error to be diffused to front pixels, a quantization input of an input density signal of a pixel corresponding to position information when the input density signal is quantized by the error diffusion processing section.

16. A halftone processing method for use with a printing apparatus capable of representing the gradation of one pixel by using a plurality of dots or that is used to generate print data to be supplied to the printing apparatus, the halftone processing method comprising the steps of:
quantizing an input density signal of multi-valued gradation corresponding to each pixel by using a threshold value and adding the resultant quantization error to front pixels in a diffused manner; and
controlling a quantization input of an input density signal of a pixel corresponding to position information for specifying an area in which a print defect is confirmed to zero when the input density signal is quantized in the error diffusion step.

17. A halftone processing method for use with a printing apparatus capable of representing the gradation of one pixel by using a plurality of dots or that is used to generate print data to be supplied to the printing apparatus, the halftone processing method comprising the steps of:
quantizing an input density signal of multi-valued gradation corresponding to each pixel by using a threshold value and adding the resultant quantization error to front pixels in a diffused manner; and
using, for an error to be diffused to front pixels, a quantization input of an input density signal of a pixel corresponding to position information for specifying an area in which a print defect is confirmed when the input density signal is quantized in the error diffusion step.

18. A program for implementing a halftoning process that is used in a printing apparatus capable of representing the gradation of one pixel by using a plurality of dots or that is used to generate print data to be supplied to the printing apparatus, the program enabling a computer to perform processing comprising the steps of:
quantizing an input density signal of multi-valued gradation corresponding to each pixel by using a threshold value and adding the resultant quantization error to front pixels in a diffused manner; and
controlling a quantization input of an input density signal of a pixel corresponding to position information for specifying an area in which a print defect is confirmed to zero when the input density signal is quantized in the error diffusion step.

19. A program for implementing a halftoning process that is used in a printing apparatus capable of representing the gradation of one pixel by using a plurality of dots or that is used to generate print data to be supplied to the printing apparatus, the program enabling a computer to perform processing comprising the steps of:
quantizing an input density signal of multi-valued gradation corresponding to each pixel by using a threshold value and adding the resultant quantization error to front pixels in a diffused manner; and
using, for an error to be diffused to front pixels, a quantization input of an input density signal of a pixel corresponding to position information for specifying an area in which a print defect is confirmed when the input density signal is quantized in the error diffusion step.
